# EUROPÄISCHE PATENTSCHRIFT

(11) **EP 0 769 407 B1**
(45) Veröffentlichungstag und Bekanntmachung des Hinweises auf die Patenterteilung: **01.03.2000**
(21) Anmeldenummer: 96116643.6
(22) Anmeldetag: 17.10.1996
(51) Int. Cl.: B60M 1/12

(54) **Mitfahrende Fahrleitung**
Travelling railway overhead line
Ligne caténaire accompagnant

(30) Priorität: 20.10.1995 CH 297995
(43) Veröffentlichungstag der Anmeldung: 23.04.1997
(73) Patentinhaber: PAUL KELLER INGENIEURBÜRO AG, CH-8600 Dübendorf (CH)
(72) Erfinder: Keller, Roland, 8614 Bertschikon (CH); Albrecht, Urs, 8486 Rikon (CH)
(74) Vertreter: EGLI-EUROPEAN PATENT ATTORNEYS

(56) Entgegenhaltungen:
- EP-A- 0 174 925
- DE-A- 1 803 762

## Beschreibung

Die Erfindung betrifft eine Vorrichtung gemäss dem Oberbegriff des Anspruches 1 und ein Verfahren gemäss dem Oberbegriff des Anspruchs 20 zur zweckmässigen Verwendung derselben.

Bei den Eisenbahnen werden Zugfahrzeuge oder Lokomotiven eingesetzt, welche unter grosser Kraftentwicklung und mit entsprechendem Energieverbrauch die Züge bewegen können. Sowohl aus energietechnischen wie auch aus umweltschützerischen Gründen werden verbreitet elektrisch betriebene Lokomotiven eingesetzt. Zum Zwecke der Stromversorgung dieser Elektrolokomotiven wird vielerorts ein Leitungsnetz aus Metalldrähten verwendet. Diese elektrischen Fahr- oder Oberleitungen verlaufen im wesentlichen parallel zu den Eisenbahnschienen und befinden sich ungefähr in der Mitte zwischen den Schienen der Geleise auf einer Höhe, welche mit dem Stromabnehmer oder Pantograph einer Lokomotive gut erreichbar ist.

Grosse Mengen an Gütern werden heute oft in Warenbehältern oder sogenannten Containern transportiert. Verschiedene Transportmittel zur Bewegung von grossen Warenmengen in Containern, wie z.B. Eisenbahnen, Schiffe und Lastwagen, verbinden deshalb Orte über ihre typischen Verkehrswege. Ein Problem im weltumspannenden Transportnetz stellt der Transfer der sperrigen Container von einem Transportmittel auf ein anderes dar. Grössere Anlagen, sogenannte Terminals, sind zum Zweck dieses Transfers bereits im Betrieb oder befinden sich noch in der Bau- oder Planungsphase. Grosse Hebevorrichtungen werden in solchen Terminals eingesetzt, um die voluminösen Container von einem Verkehrsmittel zum anderen zu bewegen. Auch das zeitweilige Lagern bzw. Stapeln dieser Container sollte nicht vergessen werden. Speziell das Be- und Entladen von einzelnen Eisenbahnwaggons oder ganzen Kompositionen wird aber durch vorhandene elektrische Oberleitungen erschwert bzw. behindert, da sich diese genau in der von den Kranen bevorzugten senkrechten Be- oder Entladungsrichtung über den Eisenbahnwaggons befinden. Wird die Oberleitung von den Containern oder den diese hebenden Kranen berührt, können Störungen, Beschädigungen oder auch Unfälle mit schwerwiegenden Folgen resultieren.

Verschiedene Ansätze zur Lösung solcher Probleme, namentlich das Weglassen (Einsatz spezieller Lokomotiven), das Unterqueren (Einsatz spezieller Waggons) oder das zeitweise Entfernen von elektrischen Oberleitungen, führen aber nur zum Teil zum Ziel und bedingen mehrheitlich zusätzliche Schwierigkeiten und/oder Investitionen.

### Verwendung von speziellen Lokomotiven:

Bei der Verwendung von speziellen Lokomotiven kommen Akkumulatorlokomotiven oder Diesellokomotiven in Betracht. Bei den Akkumulatorlokomotiven müssen die Akkumulatoren häufig aufgeladen werden. Die Tatsachen, dass sowohl zeitlich als auch absolut gesehen nur eine limitierte Kraft einsetzbar ist und dass vorteilhafterweise geringe Baugrössen möglich sind und der Antrieb keine Funken erzeugt, führten zu einem hauptsächlichen Einsatz von Akkumulatorlokomotiven in Bergwerken. Für Grossanlagen zum Umschlag von Containern mit direktem Anschluss an das internationale Eisenbahnnetz erscheinen Akkumulatorlokomotiven trotz des guten Wirkungsgrades der Elektromotoren als eher ungeeignet, da vorzugsweise (zum Zwecke der Zeit- und Kostenersparnis) die Lokomotiven der internationalen Eisenbahngesellschaften verwendet werden sollten. Damit fallen zusätzliche Rangiermanöver weg. Das letztere gilt ebenfalls für Diesellokomotiven, welche auch wegen des schlechteren energietechnischen Wirkungsgrades (vor allem auf diesen kurzen Strecken) und der Emission von Abgasen nicht in Verladeterminals eingewerden sollten. Von einem Umbau der Lokomotiven sollte aus praktischen und auch aus Gründen zu erwartender bewilligungstechnischer Probleme abgesehen werden.

### Verwendung von speziellen Waggons:

Aus der PCT-Schrift WO 94/15822 ist bekannt, dass unter Verwendung von speziellen Waggons mit ausschwenkbaren Traggestellen die elektrischen Oberleitungen unterquert werden können. Diese Technologie bedingt den Einsatz von speziellen Waggons. Das Be- und Entladen dieser Spezialwaggons geschieht vorteilhafterweise in direkter Zusammenarbeit mit einem zu ent- oder beladenden Lastkraftwagen (Camion). In grossen Verladeterminals mit vielen parallelen Geleisen wäre aber die Zufahrt für Camions nicht für jedes Geleise gewährleistet bzw. aus Platzgründen nicht möglich. Es wäre grundsätzlich wünschenswert (und auch kostengünstiger), wenn die unzähligen, schon im internationalen Gebrauch stehenden Waggons ohne irgendwelche Modifikationen verwendet werden könnten.

### Verwendung von speziellen Oberleitungen:

Es sind schwenkbare Oberleitungen bekannt (z.B. DE-A-1 803 762), welche, zum Zwecke der Freigabe des Luftraumes über den zu be- oder entladenden Waggons, über eine gewisse Strecke weggeschwenkt bzw. -gekippt werden können. Solche Systeme bergen einerseits den Vorteil der Verwendbarkeit der originalen Zugskomposition. Andererseits braucht der Schwenk- bzw. Kippmechanismus, falls er bei mehreren Masten gleichzeitig betätigt werden sollte, eine zentrale Kontrolle. Zudem ist der zusätzliche Platzbedarf der zur Seite geschwenkten bzw. gekippten Oberleitung bei grösseren Terminals störend. Die Oberleitung kann selbst (falls noch unter Strom) gefährdend wirken, oder sie kann durch die Verladearbeiten beschädigt werden. Ideal wäre eine komplette Beseitigung, oder - noch besser - der generelle Verzicht auf eine elektrische Oberleitung im Bereich von Verladeterminals.

Diese Überlegungen gelten sinngemäss auch für Waschanlagen oder Lokomotivdepots.

Will man, entsprechend der Aufgabe dieser Erfindung, die elektrische Oberleitung aus den genannten Gründen weglassen, muss zum beabsichtigten Betrieb von Elektrolokomotiven - beispielsweise im Bereiche von Verladeterminals - eine andere Lösung zur Aufrechterhaltung des elektrischen Kontaktes zwischen der stationären Stromversorgung und dem Stromabnehmer der fahrenden Lokomotive vorgesehen werden.

Erfindungsgemäss wird dies durch die Kennzeichnenden Merkmale des Anspruchs 1 erreicht, indem, beispielsweise innerhalb eines Verladeterminals, auf eine die Arbeiten störende, konventionelle elektrische Oberleitung verzichtet wird. Bei der Einfahrt eines Lastzuges wird dieser beispielsweise von einem Detektor erfasst, der diese Information an eine elektronische Steuerung weitergeben kann. Dabei trifft seine Elektrolokomotive im Randbereich des Verladeterminals auf eine sogenannte Übergabestelle. Hier erstellt ein Armelement der erfindungsgemässen Vorrichtung, dessen Position und Bewegungen über eine elektronische Steuerung überwacht bzw. gesteuert werden können, mittels Berührung durch mindestens ein Kontaktelement den elektrischen Kontakt zwischen der stationären Stromversorgung und dem Stromabnehmer der Lokomotive. Fährt die Lokomotive weiter in den Verladeterminal ein, verlässt sie den Kontakt zum konventionellen Oberleitungsnetz, das hier endet. Ab der Übergabestelle bewegen sich Arm- und Kontaktelement synchron mit der Lokomotive. Dabei wird im wesentlichen eine bestimmte und gleichbleibende Position des Kontaktelementes zum Stromabnehmer und damit die elektrische Versorgung der Lokomotive aufrechterhalten. Die Lokomotive kann so, in Abwesenheit einer konventionellen Oberleitung, dank dem beispielsweise mittels eines Verbindungselementes lösbar mit der Lokomotive verbundenen Armelement, beliebig vor- oder rückwärts fahren. Ohne störende konventionelle Oberleitung können nun Güterbehälter oder Container umgeladen werden. Bei der gleichen oder einer am anderen Ende des Terminals angeordneten Übergabestelle nimmt die Lokomotive den Kontakt zum konventionellen Oberleitungsnetz wieder auf. Darauf unterbricht das Armelement den elektrischen Kontakt zum Stromabnehmer der Lokomotive. Dank diesem System können zeitraubende Lokomotiv-Wechsel oder teure Modifikationen an Lokomotiven und/oder Waggons vermieden werden.

In den beiliegenden Figuren wird die erfindungsgemässe Vorrichtung in verschiedenen beispielhaften Ausführungsformen wie folgt beschrieben:
- Fig. 1: Übersicht über ein Verladeterminal, ausgerüstet mit einer erfindungsgemässen Vorrichtung in einer zweiten Ausführungsform, schematisch dargestellt in einer Parallelperspektive.
- Fig. 2: Erste Ausführungsform (Variante Vor) einer erfindungsgemässen Vorrichtung, dargestellt im Schnitt quer zu den Geleisen.
- Fig. 3: Erste Ausführungsform (Variante Vor) einer erfindungsgemässen Vorrichtung, dargestellt im Schnitt durch das Schotterbett längs zu den Geleisen.
- Fig. 4: Zweite Ausführungsform (Variante Tief) einer erfindungsgemässen Vorrichtung, dargestellt im Schnitt quer zu den Geleisen.
- Fig. 5: Zweite Ausführungsform (Variante Tief) einer erfindungsgemässen Vorrichtung, dargestellt im Schnitt durch die schachtförmige Vertiefung längs zu den Geleisen.
- Fig. 6: Dritte Ausführungsform (Variante Hoch) einer erfindungsgemässen Vorrichtung, dargestellt im Schnitt quer zu den Geleisen.
- Fig. 7: Dritte Ausführungsform (Variante Hoch) einer erfindungsgemässen Vorrichtung, dargestellt im Schnitt durch den Abstellstreifen längs zu den Geleisen.

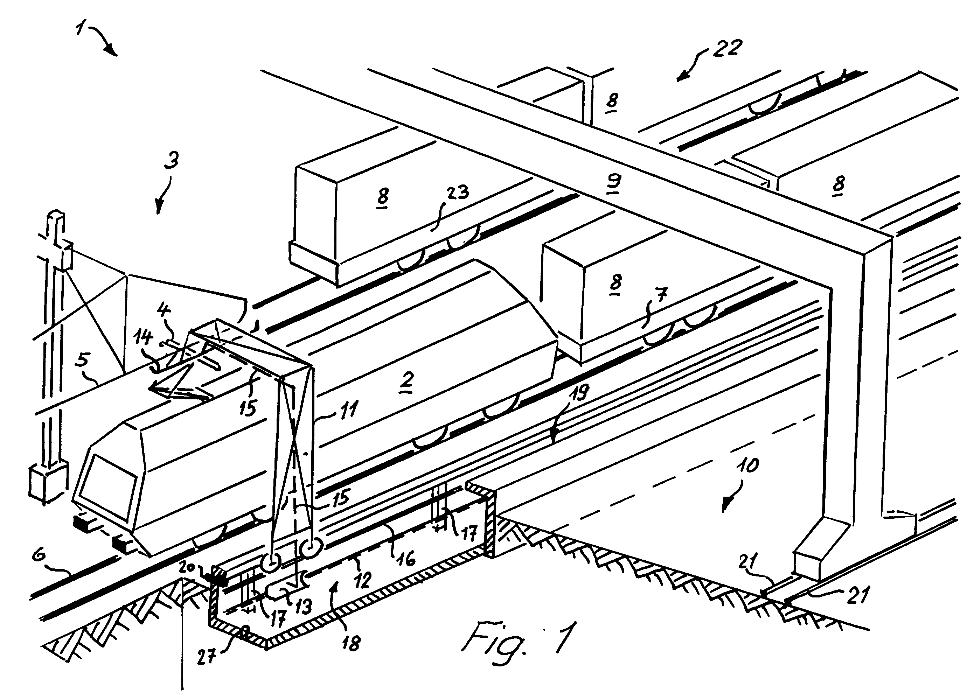

In der Figur 1 ist ein Verladeterminal 1 mit Vorrichtungen gemäss dem Oberbegriff des Anspruches 1 perspektivisch dargestellt. Dabei befindet sich eine Lokomotive 2 bei einer Übergabestelle 3. Der Stromabnehmer 4 der Lokomotive hat immer noch elektrischen Kontakt mit der konventionellen Oberleitung 5, welche an ihrem Ende 5a z.B. nach oben angeschrägt oder abgerundet ist. Auf den gleichen Geleisen 6 wie die Lokomotive stehen, an die Lokomotive angehängt, Güterwaggons 7, welche mit Containern 8 beladen sind. Diese Container 8 können einfach und direkt mit dem Kran 9 von den Güterwaggons 7 weggehoben und auf dem Abstellstreifen 10 deponiert oder auf (nicht gezeichnete) Lastwagen bzw. Sattelschleppern aufgeladen werden, ohne dass die Oberleitung 5 in irgendeiner Weise störend wirken kann. Ab dieser Übergabestelle 3 befindet sich ebenfalls ein Armelement 11 der erfindungsgemässen Vorrichtung, welches den elektrischen Kontakt zwischen dem Stromabnehmer 4 der Lokomotive 2 und der stationären Stromversorgung 12 aufrechterhält. Beispielsweise kann der elektrische Strom von der stationären Stromversorgung 12 über einen Schleifkontakt 13 und über ein Kontaktelement 14, welche über eine isolierte Leitung 15 miteinander verbunden sind, übertragen werden. Das Armelement 11 kann sich parallel zu der Lokomotive einem Führungselement 16 entlangbewegen. Das Führungselement 16 und die stationäre Stromversorgung 12 können an oder auf Stützelementen 17 angebracht sein. Dabei können die Stützelemente 17 als Pfähle aus Metall, Beton oder anderen Verbundwerkstoffen, als plattenförmige Elemente aus den entsprechenden Werkstoffen oder aus gewachsenem Fels ausgebildet sein. Die Stützelemente 17 dieser zweiten bevorzugten Ausführungsform können ganz oder teilweise in einer Grube oder einer schachtförmigen Vertiefung 18 angeordnet sein, welche parallel zum Geleise und entlang des Geleises für die Lokomotive 2 und die ihr angehängten Güterwaggons 7 liegt. Auf einer Seite (vorzugsweise oben oder in der dem Geleise zugewandten Seite) weist die schachtförmige Vertiefung 18 eine schlitzförmige Öffnung 19 auf, welche sich im wesentlichen über die ganze Länge der schachtförmigen Vertiefung 18 erstreckt, damit sich das Armelement 11 mit der isolierten Leitung 15 ungehindert entlang dem Führungselement 16 bewegen kann. Der Fortbewegung des Armelementes 11 dient ein (nicht gezeichnetes) Bewegungselement, welches einen Hand- und/oder Motorantrieb umfassen kann. Die Erkennungsmittel 20 können eine nahende oder anwesende Lokomotive 2 erkennen und mit einer (nicht gezeichneten) elektronischen Steuerung für die Bewegung des Armelementes 11 zusammenwirken. Der Kran 9 kann sich beispielsweise auf Schienen 21 fortbewegen und auch einen oder mehrere nebeneinander begehbare weitere, mit Containern 8 beladene Lastzüge 22 bzw. Waggons 23 bedienen. Selbstverständlich sind die Lastwaggons 7 und 23 und damit alle Container 8 auch für den Zugriff eines Frachtkrans für Schiffe (nicht gezeichnet) frei.

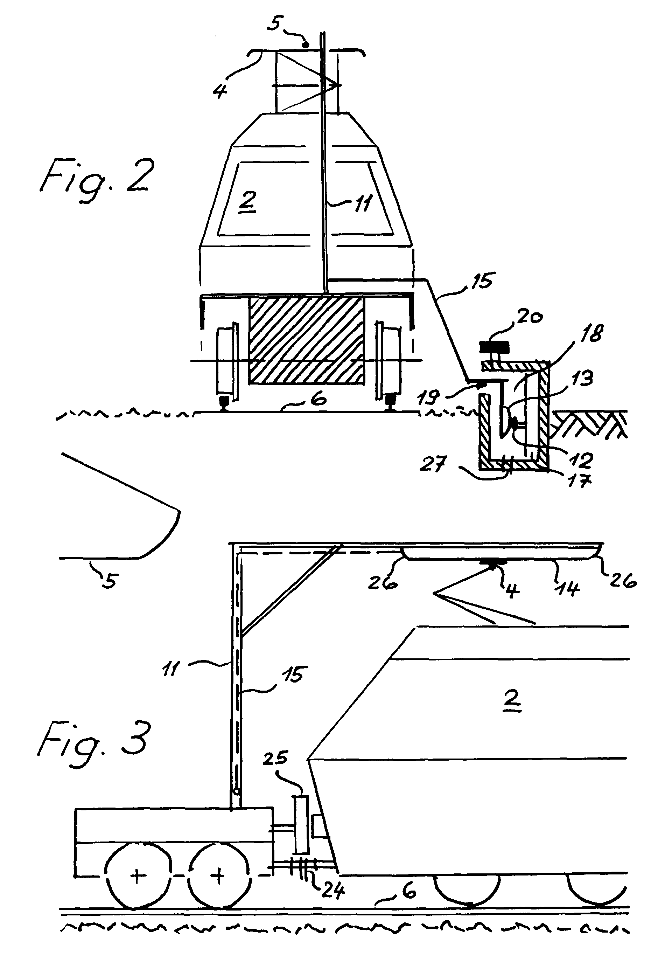

In den Figuren 2 und 3 ist eine erste vorzugsweise Ausführungsform der erfindungsgemässen Vorrichtung dargestellt. Auf dem Geleise 6 der Lokomotive befindet sich ein den dem Geleise 6 entlang bewegbares Armelement 11. Dieses kann über eine lösbare Verbindung 24 mit der Lokomotive 2 verbunden und gegenüber dieser mit Puffern 25 beabstandet sein. Das Armelement 11 weist mindestens ein isoliert befestigtes Kontaktelement 14 auf, dessen Enden 26 nach oben z.B. angeschrägt bzw. abgebogen sein können und das den elektrischen Kontakt zum Panthographen bzw. Stromabnehmer 4 der Lokomotive herstellt. Das Kontaktelement 14 kann ein Bügel von ca. 5 m Länge sein. Das Armelement weist zudem mindestens zwei Räder auf, mit denen es dem Geleise 6 der Lokomotive entlang bewegt werden kann. Angetrieben wird dieses Armelement 11 z.B. von Hand, von einem (nicht gezeichneten) eingebauten Motor oder von der Lokomotive 2. Am Rande ersichtlich ist in Fig. 3 die konventionelle Oberleitung 5, wie sie im Bereiche der Übergabestelle 3 ausgebildet sein kann. Die stationäre Stromversorgung 12 ist hier an Stützelementen 17 befestigt, welche sich in einer schachtförmigen Vertiefung 18 befinden, die wiederum eine schlitzförmige Öffnung 19 an ihrer dem Geleise 6 der Lokomotive 2 zugewandten Seite aufweisen. Über einen Schleifkontakt 13 kann der Fahrstrom von der stationären Stromversorgung 12 über eine isolierte Leitung 15 und das Kontaktelement 14 auf den Stromabnehmer 4 der Lokomotive 2 übertragen werden. Dabei ist vorgesehen, dass die stationäre Stromversorgung 12 und der Schleifkontakt nicht durch Menschen oder Tiere berührt werden können. Ebenfalls vorgesehen ist eine Entwässerung 27 der schachtförmigen Vertiefung 18. Auf die Abdeckung der schachtförmigen Vertiefung 18 kann ein Erkennungsmittel 20 in Form von z.B. einer Photozelle oder einem Induktionssensor montiert sein.

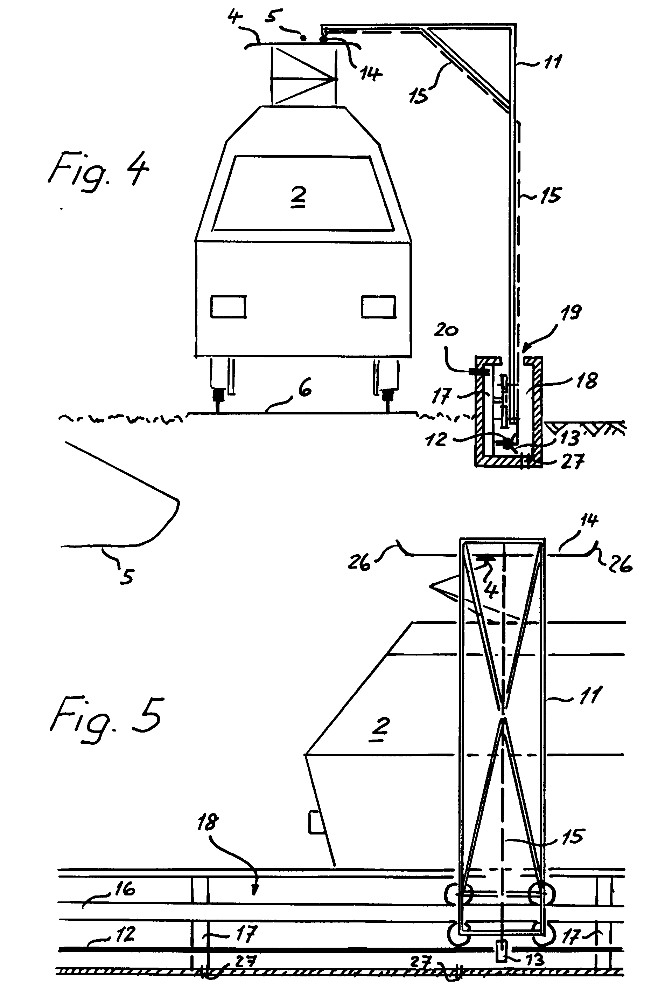

In den Figuren 4 und 5 ist eine zweite vorzugsweise Ausführungsform der erfindungsgemässen Vorrichtung dargestellt. Neben dem Geleise 6 der Lokomotive befindet sich ein entlang eines Führungselementes 16 bewegbares Armelement 11. Das Armelement 11 weist mindestens ein isoliert befestigtes Kontaktelement 14 auf, dessen Enden 26 nach oben z.B. angeschrägt bzw. abgebogen sein können und das den elektrischen Kontakt zum Panthographen bzw. Stromabnehmer 4 der Lokomotive herstellt. Das Kontaktelement 14 kann ein Bügel von ca. 5 m Länge sein. Das Armelement 11 weist zudem mindestens zwei Räder auf, mit denen es dem Führungselement 16 entlang und damit parallel zu dem Geleise 6 der Lokomotive 2 bewegt werden kann. Angetrieben wird dieses Armelement 11 z.B. von Hand, von einem (nicht gezeichneten) eingebauten Motor oder von einem (nicht gezeichneten) Seilzug. Am Rande ersichtlich ist in Fig. 5 die konventionelle Oberleitung 5, wie sie im Bereiche der Übergabestelle 3 ausgebildet sein kann. Die stationäre Stromversorgung 12 ist hier an Stützelementen 17 befestigt, welche sich in einer schachtförmigen Vertiefung 18 befinden, die wiederum eine schlitzförmige Öffnung 19 an ihrer Oberseite aufweisen. Über einen Schleifkontakt 13 kann der Fahrstrom von der stationären Stromversorgung 12 über eine isolierte Leitung 15 und das Kontaktelement 14 auf den Stromabnehmer 4 der Lokomotive 2 übertragen werden. Dabei ist vorgesehen, dass die stationäre Stromversorgung 12 und der Schleifkontakt nicht durch Menschen oder Tiere berührt werden können. Ebenfalls vorgesehen ist eine Entwässerung 27 der schachtförmigen Vertiefung 18. In einer Seitenwand der schachtförmigen Vertiefung 18 kann ein Erkennungsmittel 20 in Form von z.B. einer Photozelle oder einem Induktionssensor montiert sein.

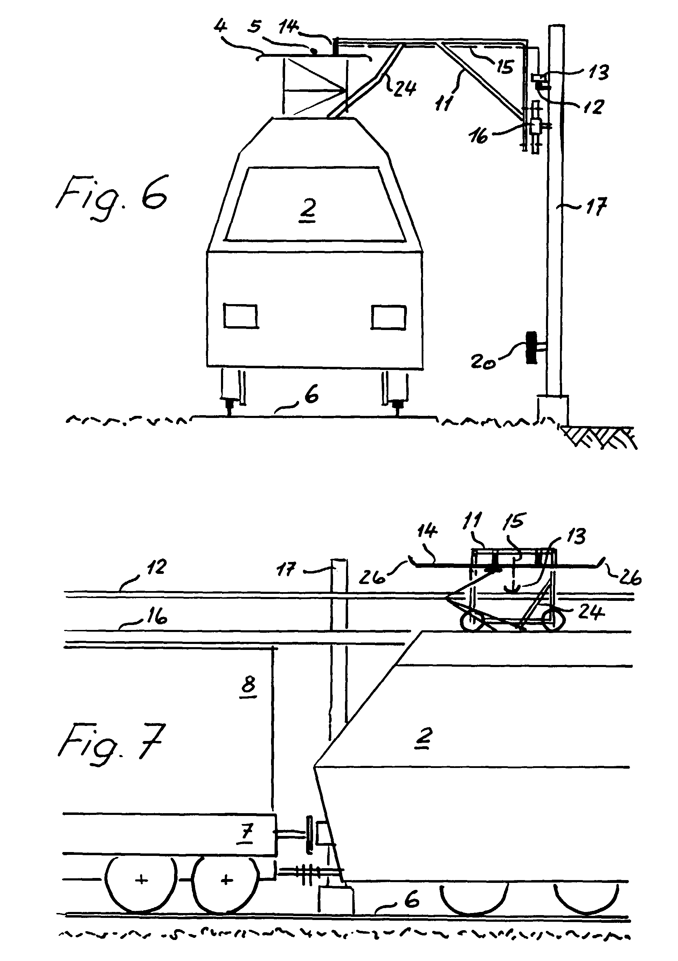

In den Figuren 6 und 7 ist eine dritte vorzugsweise Ausführungsform der erfindungsgemässen Vorrichtung dargestellt. Neben dem Geleise 6 der Lokomotive befindet sich ein entlang einem Führungselement 16 bewegbares Armelement 11. Das Armelement 11 weist mindestens ein isoliert befestigtes Kontaktelement 14 auf, dessen Enden 26 nach oben z.B. angeschrägt bzw. abgebogen sein können und das den elektrischen Kontakt zum Panthographen bzw. Stromabnehmer 4 der Lokomotive herstellt. Das Kontaktelement 14 kann ein Bügel von ca. 3 m Länge sein. Das Armelement 11 weist zudem mindestens zwei Räder auf, mit denen es dem Führungselement 16 entlang und damit parallel zu dem Geleise 6 der Lokomotive 2 bewegt werden kann. Angetrieben wird dieses Armelement 11 z.B. von Hand, von einem (nicht gezeichneten) eingebauten Motor oder von einem (nicht gezeichneten) Seilzug. Eine weitere Möglichkeit bietet sich durch eine lösbare Verbindung 24, welche z.B. auf dem Dach der Lokomotive eingreifen kann und mittels welcher das Armelement 11 automatisch an die Lokomotive 2 gekoppelt oder von derselben wieder getrennt werden kann. Die stationäre Stromversorgung 12 ist hier an Stützelementen 17 befestigt, welche sich neben dem Geleise befinden und eine Höhe von ca. der Höhe der auf den Güterwaggons 7 aufgeladenen Containern 8 aufweisen oder diese überragen. Über einen Schleifkontakt 13 kann der Fahrstrom von der stationären Stromversorgung 12 über eine isolierte Leitung 15 und das Kontaktelement 14 auf den Stromabnehmer 4 der Lokomotive 2 übertragen werden. Dank der Montagehöhe können die stationäre Stromversorgung 12 und der Schleifkontakt 13 nicht durch Menschen oder Tiere berührt werden. An einem Stützelement 17 kann ein Erkennungsmittel 20 in Form von z.B. einer Photozelle oder eines Induktionssensors montiert sein.

Fährt ein Zug zum Beispiel in ein Verladeterminal 1 ein oder nähert sich ein Zug einem solchen, so stellen Detektoren dies fest. Eine übergeordnete elektronische Steuerung kann diese Information verarbeiten und entsprechende Befehle an das Bewegungsmittel des Armelements 11 der erfindungsgemässen Vorrichtung geben.

Es können beim Einfahren eines Zuges beispielsweise drei Situationen eintreten:
1. Ein Armelement 11 befindet sich in "Standby-Position", schon wartend bei der entsprechenden Übergabestelle 3 am Rande des Terminals.
2. Das für dieses Geleise zuständige Armelement 11 befindet sich bei der Übergabestelle 3 auf der entgegengesetzten Stelle des Terminals, weil es gerade noch eine Lokomotive 2 dahin begleitet hatte.
3. Ein Armelement 11 befindet sich in einer "Park-Position" neben dem Geleise 6 des einfahrenden Zuges.

Entsprechend diesen drei verschiedenen Möglichkeiten wird die Steuerung entscheiden, wie das Armelement 11 zu reagieren hat:
1. Das Armelement 11 in "Standby-Position" wird, sobald die einfahrende Lokomotive 2 die Übergabestelle 3 erreicht, mittels seines Kontaktelementes 14 den elektrischen Kontakt zwischen stationärer Stromversorgung 12 und Stromabnehmer 4 der Lokomotive 2 herstellen.
2. Das Armelement 11 muss das Terminal 1 durchqueren, um für die an der Übergabestelle 3 eintreffende Lokomotive 2 den elektrischen Kontakt mit der stationären Stromversorgung 12 herzustellen.
3. Das Armelement 11 muss aus seiner "Park-Position" auf das dem Geleise 6 der einfahrenden Lokomotive 2 entsprechende Führungselement 16 gebracht werden, worauf es sich zur Übergabestelle 3 bewegen muss, um dort für die an der Übergabestelle 3 eintreffende Lokomotive 2 den elektrischen Kontakt mit der stationären Stromversorgung 12 herzustellen.

Beispiele 2 und 3 zeigen, dass über Erkennungsmittel 20 ein Detektieren oder Erkennen nicht nur eines anwesenden, sondern schon des einfahrenden Zuges wertvoll ist, da so Wartezeiten verkürzt oder sogar verhindert werden können, weil das Armelement 11 in Bewegung gesetzt werden kann, bevor die Lokomotive 2 die Übergabestelle 3 erreicht. Erkennungsmittel 20 können an sich bekannte Technologien umfassen, wie beispielsweise Licht-, Infrarot-, Ultraviolett- oder Ultraschallsensoren. Selbstverständlich sind auch Kombinationen von verschiedenen Arten von Sensoren denkbar.

Nachdem der elektrische Kontakt zwischen der stationären Stromversorgung 12 und dem Stromabnehmer 14 der Lokomotive 2 hergestellt ist, kann das Armelement 11 der erfindungsgemässen Vorrichtung die Lokomotive 2 begleiten, sobald sich diese in beliebiger Richtung in Bewegung setzt. Nach einer kurzen Strecke verlässt die Lokomotive 2 dann das konventionelle Oberleitungsnetz 5 und bezieht ab diesem Zeitpunkt den Fahrstrom ausschliesslich über das Kontaktelement 14 des synchron zu Lokomotive 2 mitfahrenden Armelementes 11.

Jetzt können Waren, Warenbehälter bzw. Container 8 ohne Behinderung durch eine elektrische Oberleitung 5 von den Waggons 7 ab- oder auf diese aufgeladen werden. Der Transfer auf andere Waggons oder Verkehrsmittel bzw. das Stapeln oder Lagern der Waren auf dem Gelände des Verladeterminals wird ebenfalls von keiner konventionellen elektrischen Oberleitung behindert oder durch diese gefährdet.

Während den Verladearbeiten kann - falls dies gewünscht wird - das Armelement 11 den elektrischen Kontakt zum Stromabnehmer 4 der sich in der Arbeitsposition befindenden Lokomotive 2 aufrechterhalten. Andernfalls könnte das Armelement 11 in einer weiteren Ausführungsform zu den Schienen einer anderen Lokomotive überführt werden, wo es diese andere Lokomotive in ihre Arbeitsposition führen kann.

Nach Beendigung der Arbeiten im Bereiche des Terminals 1 kann sich der Zug vor- oder rückwärts fahrend aus dem Bereich des Terminals 1 wegbewegen. Auf diesem Weg wird die Lokomotive 2 von dem synchron sich mitbewegenden Armelement 11 begleitet, bis die Lokomotive 2 auf der einen oder anderen Seite des Terminals 1 eine Übergabestelle 3 erreicht, wo sie den elektrischen Kontakt zur konventionellen Oberleitung 5 wieder aufnimmt.

Fährt die Lokomotive 2 in ein Depot ein oder nähert sich eine Lokomotive 2 einem solchen, so stellen Detektoren dies fest. Eine übergeordnete elektronische Steuerung kann diese Information verarbeiten und entsprechende Befehle an das Bewegungsmittel des Armelements 11 der erfindungsgemässen Vorrichtung geben.

Es können beim Einfahren einer Lokomotive 2 in ein Depot beispielsweise vier Situationen eintreten:
1. Ein Armelement 11 befindet sich in "Standby-Position", schon wartend bei der entsprechenden Übergabestelle 3 am Rande des Depots.
2. Das für dieses Geleise 6 bzw. diesen Teil des Depots zuständige Armelement 11 befindet sich bei der Übergabestelle 3 eines anderen Geleises des Depots, weil es gerade noch eine ausfahrende Lokomotive dahin begleitet hatte.
3. Das für dieses Geleise 6 bzw. diesen Teil des Depots zuständige Armelement 11 befindet sich bei einer anderen Lokomotive, welche es gerade in das Depot begleitet.
4. Ein Armelement 11 befindet sich in einer "Park-Position" neben dem Geleise 6 des einfahrenden Zuges.

Entsprechend diesen vier verschiedenen Möglichkeiten wird die Steuerung entscheiden, wie das Armelement 11 zu reagieren hat:
1. Das Armelement 11 in "Standby-Position" wird, sobald die einfahrende Lokomotive 2 die Übergabestelle 3 erreicht, mittels seines Kontaktelementes 14 den elektrischen Kontakt zwischen stationärer Stromversorgung 12 und Stromabnehmer 4 der Lokomotive 2 herstellen.
2 bis 4. Das Armelement 11 muss sich zur Übergabestelle 3 der eintreffenden Lokomotive 2 bewegen, um dort den elektrischen Kontakt mit der stationären Stromversorgung 12 herzustellen.

Beispiele 2 und 3 zeigen, dass über entsprechende Erkennungsmittel 20 ein Detektieren oder Erkennen nicht nur einer anwesenden, sondern schon der einfahrenden Lokomotive 2 wertvoll ist, da so Wartezeiten verkürzt oder sogar verhindert werden können, weil das Armelement 11 in Bewegung gesetzt werden kann, bevor die Lokomotive 2 die Übergabestelle 3 erreicht.

Nachdem der elektrische Kontakt zwischen der stationären Stromversorgung 12 und dem Stromabnehmer 4 der Lokomotive 2 hergestellt ist, wird das Armelement 11 der erfindungsgemässen Vorrichtung die Lokomotive 2 begleiten, sobald sich diese in Richtung Depot in Bewegung setzt. Nach einer kurzen Strecke verlässt die Lokomotive 2 dann das konventionelle Oberleitungsnetz 5 und bezieht ab diesem Zeitpunkt den Fahrstrom ausschliesslich über das Kontaktelement 14 des synchron zu Lokomotive 2 mitfahrenden Armelementes 11.

In der Standposition der Lokomotive 2 im Depot kann das Armelement 11 von der Lokomotive unabhängig und in beliebiger Richtung wieder aus dem Depot herausbewegt werden, damit es den Dienst an einer anderen Lokomotive verrichtet. Jetzt können Wartungs- und Kontrollarbeiten ohne Behinderung durch eine konventionelle elektrische Oberleitung 5 durchgeführt werden.

Nach Beendigung der Arbeiten im Bereiche des Depots wird das Armelement 11 wieder der Lokomotive 2 beigestellt. Damit ist die Lokomotive 2 wieder manövrierfähig und kann sich aus dem Bereich des Depots wegbewegen. Auf diesem Weg wird die Lokomotive von dem synchron sich mitbewegenden Armelement 11 begleitet, bis die Lokomotive 2 eine Übergabestelle 3 erreicht, wo diese den elektrischen Kontakt zur konventionellen Oberleitung 5 wieder aufnimmt.

Fährt die Lokomotive 2 in eine Waschanlage ein oder nähert sich eine Lokomotive einer solchen, so stellen Detektoren dies fest. Eine übergeordnete elektronische Steuerung kann diese Information verarbeiten und entsprechende Befehle an das Bewegungsmittel des Armelements 11 der erfindungsgemässen Vorrichtung geben.

Es können beim Einfahren einer Lokomotive 2 in eine Waschanlage beispielsweise drei Situationen eintreten:
1. Ein Armelement 11 befindet sich in "Standby-Position", schon wartend bei der entsprechenden Übergabestelle 3 am Rande der Waschanlage.
2. Das für dieses Geleise 6 zuständige Armelement 11 befindet sich bei der Übergabestelle 3 auf der anderen Seite der Waschanlage, weil es gerade noch eine ausfahrende Lokomotive dahin begleitet hatte.
3. Ein Armelement 11 befindet sich in einer "Park-Position" neben dem Geleise 6 des einfahrenden Zuges.

Entsprechend diesen drei verschiedenen Möglichkeiten wird die Steuerung entscheiden, wie das Armelement 11 zu reagieren hat:
1. Das Armelement 11 in "Standby-Position" wird, sobald die einfahrende Lokomotive 2 die Übergabestelle 3 erreicht, mittels seines Kontaktelementes 14 den elektrischen Kontakt zwischen stationärer Stromversorgung 12 und Stromabnehmer 4 der Lokomotive 2 herstellen.
2 und 3. Das Armelement 11 muss sich zur Übergabestelle 3 der eintreffenden Lokomotive 2 bewegen, um dort den elektrischen Kontakt mit der stationären Stromversorgung 12 herzustellen.

Beispiele 2 und 3 zeigen, dass über entsprechende Erkennungsmittel 20 ein Detektieren oder Erkennen schon der einfahrenden Lokomotive 2 wertvoll ist, da so Wartezeiten verkürzt oder sogar verhindert werden können, weil das Armelement 11 in Bewegung gesetzt werden kann, bevor die Lokomotive die Übergabestelle 3 erreicht.

Nachdem der elektrische Kontakt zwischen der stationären Stromversorgung 12 und dem Stromabnehmer 4 der Lokomotive 2 hergestellt ist, wird das Armelement 11 der erfindungsgemässen Vorrichtung die Lokomotive 2 begleiten, sobald sich diese in Richtung Waschanlage in Bewegung setzt. Nach einer kurzen Strecke verlässt die Lokomotive 2 dann das konventionelle Oberleitungsnetz 5 und bezieht ab diesem Zeitpunkt den Fahrstrom ausschliesslich über das Kontaktelement 14 des synchron zu Lokomotive 2 mitfahrenden Armelementes 11.

In der Standposition der Lokomotive 2 in der Waschanlage kann das Armelement 11 von der Lokomotive unabhängig und in beliebiger Richtung wieder aus der Waschanlage herausbewegt werden. Jetzt können Wartungs- und Reinigungsarbeiten ohne Behinderung durch eine konventionelle elektrische Oberleitung 5 durchgeführt werden.

Nach Beendigung der Arbeiten im Bereiche der Waschanlage wird das Armelement 11 wieder der Lokomotive 2 beigestellt. Damit ist die Lokomotive 2 wieder manövrierfähig und kann sich aus dem Bereich der Waschanlage wegbewegen. Auf diesem Weg wird die Lokomotive 2 von dem simultan sich mitbewegenden Armelement 11 begleitet, bis die Lokomotive 2 eine Übergabestelle 3 erreicht, wo sie den elektrischen Kontakt mit der konventionellen Oberleitung 5 wieder aufnehmen kann.

Die Bewegung des Armelementes 11 erfolgt in der Regel mittels eines Bewegungsmittels. Solche Bewegungsmittel umfassen einen eigenen Antrieb, beispielsweise einen Elektromotor, sei es unter Verwendung eines Zahnstangen- oder eines Adhäsionsantriebes; einen Handantrieb z.B. für den Fall einer Störung; einen Fremdantrieb z.B. mittels eines Seil- oder Kettenzuges oder verfügen über eine lösbare Verbindung mit der Lokomotive 2 mit Hilfe eines Verbindungselementes 24. Dieses Verbindungselement 24 kann beispielsweise einen an der Lokomotive eingehängten Bügel oder eine Magnetkupplung umfassen - andere in der Eisenbahntechnik verwendete Verbindungen kommen ebenfalls in Betracht. Denkbar ist ebenfalls eine Konstruktion des Verbindungselementes 24, das beim Einfahren des Zuges am Stromabnehmer 4 oder am Dachaufbau der Lokomotive 2 einhängt.

Wie schon beschrieben, sind die Hauptvorteile dieser Erfindung darin zu sehen, dass sie den Betrieb einer Elektrolokomotive ermöglichen, ohne dass in bestimmten und klar definierten Bereichen des Schienennetzes eine konventionelle Oberleitung vorgesehen werden muss. Wesentlich ist dabei, dass unter Anwendung dieser Erfindung in Schienenbereichen, wo z.B. Verlade-, Wartungs-, Reinigungs- oder Servicearbeiten durchgeführt werden müssen, sowohl auf die konventionelle Oberleitung als auch auf jedwede Modifikation an Lokomotiven oder Eisenbahnwaggons verzichtet werden kann.

Natürlich kann ein solches Armelement bloss ein, aber auch zwei oder mehrere Kontaktelemente umfassen. Bei Verwendung von mindestens zwei Kontaktelementen könnten sogar zwei Lokomotiven, welche sich auf verschiedenen Geleisen aufhalten, von einem einzigen Armelement bedient werden. Sinngemäss gelten dann die bisherigen Überlegungen auch für zwei Lokomotiven, welche sich beispielsweise auf gleicher Höhe auf zwei benachbarten Geleisen bewegen sollen.

Vorteilhaft für Enden der Kontaktelemente sind z.B. Abrundungen, Anschrägungen oder andere vorstellbare Ausbildungen, welche es erlauben bzw. erleichtern, dass das Kontaktelement in Fahrtrichtung der Lokomotive - oder entgegengesetzt dazu - auf den Pantograph oder einen anders gearteten Stromabnehmer aufschiebbar sein kann.

Für die Führung der Armelemente parallel zu den Schienen sind hier beispielsweise drei verschiedene Ausführungen von Führungseinrichtungen erwähnt, welche z.B. Profile aus Metall oder Verbundwerkstoffen umfassen können.

In einer ersten Ausführungsform wird eine Schiene oder werden beide Schienen des von der Lokomotive 2 benutzten Geleises 6 verwendet. Dies hat den Vorteil, dass keine zusätzlichen Führungselemente 16 erstellt werden müssen. In diesem Fall kann in einer ersten Variante eine lösbare Verbindung zwischen der Lokomotive 2 und dem Armelement 11, das als Schlitten ausgebildet sein kann, über ein Verbindungselement 24 hergestellt werden. Dieses Verbindungselement 24 kann einen Bügel umfassen, der zur temporären Verbindung des Armelementes 11 mit der Lokomotive 2 dient; Magnetkupplungen und andere in der Eisenbahntechnik verwendete, lösbare Verbindungen zur Lokomotive sind ebenfalls denkbar. Unabhängig von der Lokomotive könnte ein Handantrieb die Bewegung des Armelementes ermöglichen. Eine zweite Variante umfasst einen Motor zur Bewegung des Armelementes. Mit einem Motorantrieb liesse sich das Armelement über eine elektronische Steuerung, welche wiederum mit den Erkennungsmitteln 20 oder Detektoren verbunden ist, kontrollieren. Die stationäre Stromversorgung 12 wird vorteilhafterweise in einen parallel zu den Schienen verlaufenden Schacht oder eine entsprechende schachtförmige Vertiefung 18 verlegt, wobei der Schacht den Zugriff zur Stromversorgung für das Armelement 11 gewährleisten muss. Für Mensch, Tier und andere Umwelteinflüsse hingegen muss eine Absperrung vorgesehen sein, damit Unfälle verunmöglicht werden. Das Armelement 11 kann den elektrischen Kontakt zur stationären Stromversorgung 12 über einen Schleifkontakt 13 aufrechterhalten, eine aufrollbare Kabelverbindung ist aber auch denkbar. Schachtförmige Vertiefungen 18 sollen mit einer schlitzförmigen Öffnung 19 versehen sein und Entwässerungsvorrichtungen 27 aufweisen.

In einer zweiten und dritten Ausführungsform werden die Führungselemente 16 an oder auf Stützelementen 17 befestigt. Diese Stützelemente 17 können Wände, Pfeiler oder ähnliche Bauteile sein, welche Mauerwerk, Beton oder andere Materialien wie Stahl, Eisen oder Verbundwerkstoffe aufweisen können - auch gewachsener Fels kommt dazu in Frage. Die Höhe der Stützelemente 17 kann dabei die Lage der Führungselemente 16 bestimmen oder auch von dieser Lage unabhängig die Überdeckung einer Anlage tragen.

In der zweiten Ausführungsform dienen die Stützelemente 17 dazu, die Führungselemente 16 auf einer bestimmten Höhe zu tragen, so dass die stationäre Stromversorgung 12, welche in einem parallel zu den Schienen angeordneten Schacht oder in einer entsprechenden Grube verlegt wird, in die Nähe der Führungselemente 16 zu liegen kommt. Damit kann der elektrische Kontakt zum Armelement 11 in ähnlicher Weise wie in der ersten Ausführungsform ausgestaltet sein. Auch die Schutzeinrichtungen zur Verhinderung des Berührens der stationären Stromversorgung 12 wären dann der ersten Ausführungsform entsprechend ausgebildet.

In der dritten Ausführungsform dienen die Stützelemente 17 dazu, die Führungselemente 16 ungefähr auf der Höhe von mit Containern 8 beladenen Waggons 7 eines Lastenzuges zu halten. Sinnvollerweise sollte auch die stationäre Stromversorgung 12 in eine entsprechende Höhe verlegt werden, damit der permanente Zugriff, entsprechend den Beschreibungen der beiden vorhergehenden Ausführungsformen, für das Armelement 11 gewährleistet ist. Der Schutz der stationären Stromversorgung 12 kann in dem Masse reduziert werden, wie das Risiko einer Berührung vermieden werden kann. Diese Ausführungsform ermöglicht eine extrem kompakte Konstruktion des Armelementes 11. Darum eignet sie sich auch zur temporären, mechanischen Befestigung des Armelementes 11 direkt am Stromabnehmer 4 der Lokomotive 2. So kann auf einfache Art und Weise das Armelement 11 an die Lokomotive 2 "gehängt" werden. Das Armelement 11 wird dann durch die Lokomotive 2 bewegt und folgt dieser absolut synchron zur Bewegung des Stromabnehmers 4.

Auch wenn bisher immer nur von einem Armelement 11 gesprochen wurde, ist klar, dass z.B. zwei Führungselemente 16 an den gleichen Stützelementen 17 befestigt werden können. Geschieht dies beispielsweise so, dass sich die Führungselemente 16 auf den entgegengesetzten Seiten der Stützelemente 17 befinden, dann können zwei Armelemente 11 sich je individuell mit einer Lokomotive entlang diesen Führungselementen 16 bewegen. Selbstverständlich müssen dabei nicht beide Führungselemente 16 auf der gleichen Höhe befestigt und nicht beide Armelemente 11 mit den gleichen Bewegungsmitteln bewegt werden.

## Patentansprüche

1. Vorrichtung zur Aufrechterhaltung des elektrischen Kontaktes zwischen einer stationären Stromversorgung und dem Stromabnehmer einer Lokomotive, **dadurch gekennzeichnet, dass** mindestens ein Armelement (11) entlang den Schienen (6) für die Lokomotive (2) und im wesentlichen in einer Richtung parallel zu diesen mittels Bewegungsmitteln bewegbar ist, und dass das Armelement (11) mit der stationären Stromversorgung (12) sowie dem Stromabnehmer (4) der Lokomotive (2) elektrisch kontaktierbar ist.

2. Vorrichtung nach Anspruch 1, **dadurch gekennzeichnet, dass** das Armelement (11) synchron mit der Lokomotive (2) bewegbar ist und gegenüber dieser eine im wesentlichen gleichbleibende Position einnehmen kann.

3. Vorrichtung nach Anspruch 1, **dadurch gekennzeichnet, dass** das Armelement (11) unabhängig von einer Lokomotive (2) beliebig bewegbar ist.

4. Vorrichtung nach einem der vorhergehenden Ansprüche, **dadurch gekennzeichnet, dass** die Bewegungsmittel einen Motorantrieb umfassen.

5. Vorrichtung nach einem der vorhergehenden Ansprüche, **dadurch gekennzeichnet, dass** die Bewegungsmittel einen Handantrieb umfassen.

6. Vorrichtung nach einem der vorhergehenden Ansprüche, **dadurch gekennzeichnet, dass** das Armelement (11) ein Verbindungselement (24) umfasst, mit welchem es mit der Lokomotive (2) lösbar verbunden werden kann.

7. Vorrichtung nach einem der vorhergehenden Ansprüche, **dadurch gekennzeichnet, dass** sie Erkennungsmittel (20) aufweist, welche zum Erkennen einer sich nahenden oder anwesenden Lokomotive (2) dienen.

8. Vorrichtung nach Anspruch 7, **dadurch gekennzeichnet, dass** die Erkennungsmittel (20) mit einer elektronischen Steuerung für die Bewegung des Armelementes (11) zusammenwirken.

9. Vorrichtung nach einem der vorhergehenden Ansprüche, **dadurch gekennzeichnet, dass** das Armelement (11) ein Kontaktelement (14) umfasst, das den Stromabnehmer (4) einer Lokomotive (2) berühren kann.

10. Vorrichtung nach Anspruch 9, **dadurch gekennzeichnet, dass** das Armelement (11) mindestens zwei solche Kontaktelemente (14) umfasst.

11. Vorrichtung nach Anspruch 9 oder 10, **dadurch gekennzeichnet, dass** Enden (26) der Kontaktelemente (14) nach oben angeschrägt oder abgerundet sind.

12. Vorrichtung nach einem der vorhergehenden Ansprüche, **dadurch gekennzeichnet, dass** das Armelement (11) entlang von Führungselementen (16) bewegbar ist.

13. Vorrichtung nach Anspruch 12, **dadurch gekennzeichnet, dass** die Führungselemente (16) identisch mit den Schienen (6) der Lokomotive (2) sind.

14. Vorrichtung nach Anspruch 12, **dadurch gekennzeichnet, dass** die Führungselemente (16) neben den Schienen (6) der Lokomotive (2) auf oder an Stützelementen (17) befestigt sind, und im wesentlichen die Höhe von mit Containern (8) beladenen Waggons (7) erreichen.

15. Vorrichtung nach Anspruch 12, **dadurch gekennzeichnet, dass** die Führungselemente (16) auf oder an Stützelementen (17) befestigt sind, welche in einer Grube stehen, und dass sie vom freien Zugang abgeschirmt sind.

16. Anlage mit einer Vorrichtung nach einem der Ansprüche 12 bis 15, **dadurch gekennzeichnet, dass** sich die Führungselemente (16) über einen wesentlichen Teil der Länge einer Anlage erstrecken.

17. Anlage nach Anspruch 16, **dadurch gekennzeichnet, dass** die Anlage dem Umschlag von Containern (8) dient.

18. Anlage nach Anspruch 16, **dadurch gekennzeichnet, dass** die Anlage dem Waschen von Lokomotiven und/oder Eisenbahnwaggons dient.

19. Anlage nach Anspruch 16, **dadurch gekennzeichnet, dass** die Anlage ein Lokomotivdepot umfasst.

20. Verfahren zur Aufrechterhaltung des elektrischen Kontaktes zwischen einer stationären Stromversorgung (12) und dem Stromabnehmer (4) einer Lokomotive (2) entsprechend dem Anspruch 1, **dadurch gekennzeichnet, dass** mindestens ein Armelement (11) entlang den Schienen (6) für die Lokomotive (2) und im wesentlichen parallel zu diesen bewegt wird bis zu einer Übergabestelle (3), wo die Lokomotive (2) den Kontakt zum konventionellen Oberleitungsnetz (5) verlassen oder wieder aufnehmen kann.

## Claims

1. Apparatus for maintaining the electrical contact between a stationary power supply and the current collector of a locomotive, characterized in that at least one arm element (11) can be moved along "the rails (6) for the locomotive (2) and essentially in a direction parallel to the said rails by moving means, and in that the arm element (11) can be brought into electrical contact with the stationary power supply (12) and the current collector (4) of the locomotive (2).

2. Apparatus according to Claim 1, characterized in that the arm element (11) can be moved synchronously with the locomotive (2) and can assume an essentially unchanging position with respect to the latter.

3. Apparatus according to Claim 1, characterized in that the arm element (11) can be moved as desired, independently of a locomotive (2).

4. Apparatus according to one of the preceding claims, characterized in that the moving means comprise a motor drive.

5. Apparatus according to one of the preceding claims, characterized in that the moving means comprise a manual drive.

6. Apparatus according to one of the preceding claims, characterized in that the arm element (11) comprises a connecting element (24), by which it can be releasably connected to the locomotive (2).

7. Apparatus according to one of the preceding claims, characterized in that it has detecting means (20), which serve for detecting an approaching or present locomotive (2) .

8. Apparatus according to Claim 7, characterized in that the detecting means (20) interact with an electronic control for the movement of the arm element (11) .

9. Apparatus according to one of the preceding claims, characterized in that the arm element (11) comprises a contact element (14), which can contact the current collector (4) of a locomotive (2).

10. Apparatus according to Claim 9, characterized in that the arm element (11) comprises at least two such contact elements (14).

11. Apparatus according to Claim 9 or 10, characterized in that the ends (26) of the contact elements (14) are upwardly bevelled or rounded off.

12. Apparatus according to one of the preceding claims, characterized in that the arm element (11) can be moved along guiding elements (16).

13. Apparatus according to Claim 12, characterized in that the guiding elements (16) are identical to the rails (6) of the locomotive (2).

14. Apparatus according to Claim 12, characterized in that the guiding elements (16) are fastened alongside the rails (6) of the locomotive (2) on or against supporting elements (17), and essentially reach the height of wagons (7) laden with containers (8).

15. Apparatus according to Claim 12, characterized in that the guiding elements (16) are fastened on or against supporting elements (17), which are situated in a pit, and in that they are shielded against free access.

16. Installation with an apparatus according to one of Claims 12 to 15, characterized in that the guiding elements (16) extend over a major part of the length of an installation.

17. Installation according to Claim 16, characterized in that the installation serves for the handling of containers (8).

18. Installation according to Claim 16, characterized in that the installation serves for the washing of locomotives and/or railway wagons.

19. Installation according to Claims 16, characterized in that the installation comprises a locomotive depot.

20. Method of maintaining the electrical contact between a stationary power supply (12) and the current collector (4) of a locomotive (2) in a way corresponding to Claim 1, characterized in that at least one arm element (11) is moved along the rails (6) for the locomotive (2) and essentially parallel to the said rails up to a transfer point (3), where the locomotive (2) can leave or resume contact with the conventional overhead line system (5).

## Revendications

1. Dispositif pour maintenir le contact électrique entre une alimentation stationnaire de courant et le pantographe d'une locomotive, caractérisé en ce qu'au moins un élément (11) en forme de bras est mobile le long des rails (6) pour la locomotive (2) et essentiellement dans une direction parallèle à ces derniers à l'aide de moyens de déplacement, et en ce que l'élément (11) en forme de bras peut être mis en contact électrique avec l'alimentation stationnaire de courant (12) et avec le pantographe (4) de la locomotive (2).

2. Dispositif selon la revendication 1, caractérisé en ce que l'élément (11) en forme de bras est mobile de manière synchrone avec la locomotive (2) et peut prendre, vis-à-vis de cette dernière, une position essentiellement constante.

3. Dispositif selon la revendication 1, caractérisé en ce que l'élément (11) en forme de bras est mobile de n'importe quelle manière indépendamment d'une locomotive (2).

4. Dispositif selon l'une quelconque des revendications précédentes, caractérisé en ce que les moyens de déplacement comprennent une commande par moteur.

5. Dispositif selon l'une quelconque des revendications précédentes, caractérisé en ce que les moyens de déplacement comprennent une commande manuelle.

6. Dispositif selon l'une quelconque des revendications précédentes, caractérisé en ce que l'élément (11) en forme de bras comprend un élément de liaison (24) avec lequel il peut venir se relier de manière amovible avec la locomotive (2).

7. Dispositif selon l'une quelconque des revendications précédentes, caractérisé en ce qu'il présente des moyens de reconnaissance (20) qui servent à reconnaître une locomotive (2) présente ou qui s'approche.

8. Dispositif selon la revendication 7, caractérisé en ce que les moyens de reconnaissance (20) coopèrent avec une commande électronique pour le déplacement de l'élément (11) en forme de bras.

9. Dispositif selon l'une quelconque des revendications précédentes, caractérisé en ce que l'élément (11) en forme de bras comprend un élément de contact (14) qui peut effleurer le pantographe (4) d'une locomotive (2).

10. Dispositif selon la revendication 9, caractérisé en ce que l'élément (11) en forme de bras comprend au moins deux éléments de contact (14) de ce type.

11. Dispositif selon la revendication 9 ou 10, caractérisé en ce que les extrémités (26) des éléments de contact (14) sont chanfreinées vers le haut ou arrondies.

12. Dispositif selon l'une quelconque des revendications précédentes, caractérisé en ce que l'élément (11) en forme de bras est mobile le long d'éléments de guidage (16).

13. Dispositif selon la revendication 12, caractérisé en ce que les éléments de guidage (16) sont identiques aux rails (6) de la locomotive (2).

14. Dispositif selon la revendication 12, caractérisé en ce que les éléments de guidage (16) sont fixés à côté des rails (6) de la locomotive (2) sur ou contre des éléments d'appui (17) et atteignent essentiellement la hauteur de wagons (7) chargés de conteneurs (8) .

15. Dispositif selon la revendication 12, caractérisé en ce que les éléments de guidage (16) sont fixés sur ou contre des éléments d'appui (17) qui sont disposés dans une tranchée et qui sont protégés contre une liberté d'accès.

16. Installation comprenant un dispositif selon l'une quelconque des revendications 12 à 15, caractérisée en ce que les éléments de guidage (16) s'étendent sur une partie essentielle de la longueur d'une installation.

17. Installation selon la revendication 16, caractérisée en ce que l'installation sert au transbordement de conteneurs (8).

18. Installation selon la revendication 16, caractérisée en ce que l'installation sert au lavage de locomotives et/ou de wagons de chemins de fer.

19. Installation selon la revendication 16, caractérisée en ce que l'installation comprend un dépôt de locomotives.

20. Dispositif pour la maintien du contact électrique entre une alimentation stationnaire de courant (12) et le pantographe (4) d'une locomotive (2) selon la revendication 1, caractérisé en ce qu'au moins un élément (11) en forme de bras se déplace le long des rails (6) pour la locomotive (2) et essentiellement parallèlement à ces derniers jusqu'à un endroit de transition (3) où la locomotive (2) peut perdre ou reprendre son contact avec le réseau de caténaire conventionnel (5).
